# EUROPÄISCHE PATENTSCHRIFT

(11) **EP 1 561 646 B1**
(45) Veröffentlichungstag und Bekanntmachung des Hinweises auf die Patenterteilung: **09.01.2008**
(21) Anmeldenummer: 05001754.0
(22) Anmeldetag: 28.01.2005
(51) Int. Cl.: B60R 16/04, B62D 43/10, H01M 2/10

(54) **Modul zur Befestigung einer Batterie in einem Kraftfahrzeug**
Module for the fixation of a battery in a motor vehicle
Module pour la fixation d'une batterie dans un véhicule automobile

(30) Priorität: 04.02.2004 DE 102004005490
(43) Veröffentlichungstag der Anmeldung: 10.08.2005
(73) Patentinhaber: GM Global Technology Operations, Inc., Detroit, MI 48265-3000 (US)
(72) Erfinder: Schlamann, Hermann-Walter, 55288 Armsheim (DE)
(74) Vertreter: Daniel, Ulrich W.P.

(56) Entgegenhaltungen:
- EP-A- 0 765 796
- EP-A- 1 454 797
- DE-A1- 10 002 458
- DE-A1- 10 119 714
- DE-U1- 9 320 701

## Beschreibung

Die Erfindung bezieht sich auf ein Modul zur Befestigung einer Batterie in einem von einer Felge eines Ersatzrades und einer Ersatzradmulde gebildeten Hohlraum in einem Kraftfahrzeug.

Bei Kraftfahrzeugen bestehen zusehends mehr Package-Probleme im Motorraum, die eine entsprechende Verlängerung der Kraftfahrzeuge und eine ungünstige Achslastverteilung bedingen. Insbesondere Kraftfahrzeuge mit schweren Dieselmotoren werden demzufolge immer "kopflastiger". Außerdem liegt die Batterie in einem Crashbereich, weshalb bei einem Frontalunfall die Batterie zerstört werden kann und dadurch Schäden oder gar die Verletzung von Kraftfahrzeuginsassen durch Batteriesäure oder elektrischen Kurzschluss auftreten können.

Die gattungsbildende DE 93 20 701 U1 offenbart ein Kraftfahrzeug mit einer Batterie als Bestandteil einer elektrischen Anlage und einem in einer Ersatzradmulde ablegbaren Ersatzrad. Die Batterie ist in einem von einer Felge des Ersatzrades gebildeten Hohlraum angeordnet und in der äußeren Form zumindest teilweise dem Hohlraum angepasst.

Weiterhin zeigt die DE 100 02 458 A1 eine für ein Kraftfahrzeug bestimmte Vorrichtung zur Fixierung einer Batterie in einer Radschüssel eines in einer Ersatzradmulde untergebrachten Ersatzrades. Die Batterie ist an dem Ersatzrad befestigt, das derart in der Ersatzradmude angeordnet ist, dass die Radschüssel einem Boden der Ersatzradmulde zugewandt und die Batterie von oben in das Ersatzrad einsetzbar ist.

Die Positionierung der Batterie in der Felge des Ersatzrades birgt einige Anforderungen. Zum einen muss die Batterie gegen Beschädigungen durch das Ersatzrad geschützt werden und zum anderen sind Maßnahmen zum Trennen der Batterie von dem Bordnetz bei einem Unfall vorzusehen. Hierbei ist es allerdings erforderlich, einige Funktionen des in dem Kraftfahrzeug vorhandenen elektrischen Systems, wie beispielsweise ABS, Airbags, Beleuchtung und Zentralverriegelung, funktionsfähig zu erhalten. Zusätzlich muss das Ersatzrad gehaltert werden.

Die nicht vorveröffentlichte EP 1 454 797 A1 zeigt ein Modul zur Befestigung einer Batterie in einem von einer Felge eines Ersatzrades und einer Ersatzradmulde gebildeten Hohlraum in einem Kraftfahrzeug. Im Weiteren ist ein in der Ersatzradmulde gehaltener Batterieträger und ein damit verbundener, die Batterie zumindest teilweise übergreifender Ersatzradträger vorgesehen.

Es ist Aufgabe der Erfindung, ein Modul zur Befestigung einer Batterie der eingangs genannten Art zu schaffen, das eine zuverlässige Befestigung der Batterie gewährleistet.

Erfindungsgemäß wird die Aufgabe gelöst durch ein Modul zur Befestigung einer Batterie mit den Merkmalen des Anspruchs 1.

Das im Wesentlichen aus dem Batterieträger und dem Ersatzradträger zusammengesetzte Modul stellt somit gleichzeitig einen Schutz und eine Halterung der Batterie sowie des Ersatzrades sicher, wobei der Ersatzradträger die Felge des Ersatzrades zu der Batterie beabstandet, um dieselbe vor einer Beschädigung durch das Ersatzrad zu schützen. Um die mit ihrem Fuß in der wannenartigen Vertiefung stehende Batterie sicher zu haltern, ist dem Batterieträger das Befestigungsmittel für die Batterie zugeordnet.

Die Ersatzradmulde ist üblicher Weise entsprechend dem Ersatzrad rund ausgeführt. Damit der Batterieträger möglichst sicher in der Ersatzradmulde angeordnet ist, weist der Batterieträger einen zylindrischen Auflagerand auf, der abgestuft in eine Trägerfläche mit einer wannenartigen Vertiefung zur Aufnahme der Batterie übergeht. Zur Aufnahme des Batterieträgers ist das Bodenblech der Ersatzradmulde entsprechend konturiert, damit der Batterieträger mit seinem Auflagerand möglichst plan mit dem Bodenblech verbunden werden kann. Die wannenartige Vertiefung dient neben der Lagefixierung der Batterie auch der Aufnahme von Batteriesäure, beispielsweise beim Auffüllen oder bei einer Beschädigung des Batteriegehäuses. Damit kein Spritzwasser oder dergleichen in die Ersatzradmulde gelangen kann, ist der Batterieträger mit seinem Auflagerand zweckmäßig mit dem Bodenblech verklebt, wobei der Klebstoff eine Abdichtung bildet.

Bevorzugt weist der Batterieträger zumindest eine von der Vertiefung zum Auflagerand verlaufende Ausformung für den Durchtritt eines an die Batterie angeschlossenen Massekabels eines Bordnetzes auf. Die im Querschnitt U-förmige Ausformung verläuft von der wannenartigen Vertiefung zum Auflagerand.

Vorzugsweise ist in die Trägerfläche eine Öffnung zur Aufnahme eines Sicherungsgehäuses eingelassen. Das Sicherungsgehäuse wird von einer zum Bodenblech weisenden Seite des Batterieträgers in die Öffnung eingesteckt und mit dem Batterieträger verbunden. Dieser Einbau des Sicherungsgehäuses kann gemeinsam mit dem unter dem Bodenblech des Kraftfahrzeuges verlaufenden Stromkabel vollautomatisch erfolgen. Darüber hinaus ist es möglich das Sicherungsgehäuse als Bestandteil eines Moduls auszuführen, dem im Weiteren Kraftstoff- sowie Bremsleitungen und ein Tank des Kraftfahrzeuges zugeordnet sind.

Zweckmäßigerweise ist das Sicherungsgehäuse abgedichtet in der Öffnung befestigt. In dem Sicherungsgehäuse ist eine Absicherungsvorrichtung zur Trennung eines Stromkabels vom Bordnetz vorgesehen. Die Trennung des Stromkabels vom Bordnetz wird vorzugsweise mittels einer pyrotechnischen Einrichtung, beispielsweise einer so genannten Airbag-Zündpille, erreicht, sie kann aber auch elektronisch durchgeführt werden. Im Weiteren weist das Sicherungsgehäuse eine Strom-Verteilung mit einer Absicherung für eine Spannungsversorgung notwendiger Aggregate auf, die bei einer Trennung des Stromkabels vom Bordnetz weiterhin mit Spannung versorgt werden müssen. Solche notwendigen Aggregate sind beispielsweise Airbags, ABS, Zentralverriegelung und/oder die Beleuchtung des Kraftfahrzeuges.

Bevorzugt ist das Befestigungsmittel in einer Aufnahme angeordnet, die sich von dem Boden der Vertiefung bis kurz unterhalb der Trägerfläche des Batterieträgers erstreckt. Das Befestigungsmittel kann als Klemmplatte ausgebildet sein, die sich zum einen auf dem Boden der Vertiefung und zum anderen auf einem fußseitigen Rand der Batterie abstützt.

Zur Vermeidung von Korrosion aufgrund eventuell austretender Batteriesäure und zur Bereitstellung eines relativ leichten Bauteils besteht der Batterieträger aus einem Kunststoff, insbesondere einem faserverstärkten Kunststoff.

Zweckmäßigerweise weist der Batterieträger ein Aufsatzstück zur Halterung des Ersatzradträgers auf. Das Aufsatzstück ist mit seiner Aufstandfläche an die Trägerfläche angepasst und weist zumindest einen von der Aufstandsfläche abstehenden Dom mit einer brückenartigen Ausnehmung an seinem Fußende auf. Die Dome sind umfangsmäßig gleich verteilt auf der Aufstandsfläche angeordnet. Möglich ist aber auch, die Dome direkt an der Trägerfläche anzuformen, wodurch der Batterieträger einstückig hergestellt ist. Damit das Massekabel der Batterie ohne Einengung von dem Batterieträger weggeführt werden kann, sind die Dome an ihren Füßen mit der brückenartige Ausnehmung versehen, wobei die Dome an ihren Kopfflächen plan ausgestaltet sind. Das Aufsatzstück ist derart an dem Batterieträger angeordnet, dass ein Dom mit seiner brückenartigen Ausnehmung über der U-förmigen Ausnehmung angeordnet ist, um eine Durchlassöffnung für das Batterie-Massekabel bereitzustellen. Das Aufsatzstück ist beispielsweise mit dem Batterieträger verklebt. Der Batterieträger und das Aufsatzstück können aber auch einstückig gefertigt sein.

Um den Ersatzradträger mit dem Aufsatzstück zu verbinden, sind Trägerfüße des Ersatzradträgers an einer Verbindungsseite zu den Domen des Aufsatzstückes abgekröpft, um eine plane Verbindungsfläche mit den Stirnseiten der Dome zu bilden. Vorzugsweise ist der Trägerfuß mit dem Dom verschraubt. Damit der Ersatzradträger möglichst leicht zu handhaben ist, sind die Füße im weiteren Verlauf in Richtung zu einem Grundkörper des Ersatzradträgers U-förmig ausgestaltet. Hierbei sind die U-Schenkel von einem Basissteg in Richtung zum Auflagerand des Batterieträgers orientiert. Der Grundkörper ist im Wesentlichen rund, wobei die Trägerfüße spinnenartig von dem Grundkörper abgehen. Der Durchmesser der Grundkörpers ist kleiner als der Durchmesser des Batterieträgers. Mit seinen Trägerfüßen übergreift der Ersatzradträger die Batterie. Bevorzugt ist der Ersatzradträger auf seinem Grundkörper mit einem Bolzen zur Befestigung des Ersatzrades versehen.

Mit dem erfindungsgemäßen Modul ist es möglich, die Batterie sicher in der Ersatzradmulde unterzubringen. Zusätzlich zu den bereits genannten Vorteilen wird eine verbesserte Achslastverteilung des Kraftfahrzeuges und eine erhöhte Gestaltungsfreiheit der Kraftfahrzeugfront erreicht, da die Batterie im Heck des Kraftfahrzeuges angeordnet ist. Weiterhin wird eine Überhitzung der Batterie durch den Motor vermieden, wodurch die Lebensdauer der Batterie erhöht wird. Die Anordnung der Batterie innerhalb des Ersatzrades in der Ersatzradmulde ist ferner vorteilhaft, weil dadurch das Fahrzeugpackage und damit die Nutzungsmöglichkeit nicht beeinträchtigt wird. Mit dem aufgezeigten Verkabelungskonzept sind alle Anforderungen an Sicherheitseinrichtungen umsetzbar. Weiterhin ist ein weitgehend modularer Aufbau und somit ein automatisierter Einbau in das Kraftfahrzeug möglich.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert

Die Erfindung wird im Folgenden anhand eines Ausführungsbeispieles unter Bezugnahme auf die zugehörigen Zeichnungen näher erläutert. Es zeigt:
- Fig. 1: eine perspektivische Ansicht eines erfindungsgemäßen Moduls zur Befestigung einer Batterie in einem Kraftfahrzeug,
- Fig. 2: eine zweite perspektivische Ansicht des Moduls nach Fig. 1,
- Fig. 3: eine dritte perspektivische Ansicht des Moduls nach Fig. 1,
- Fig. 4: eine vierte perspektivische Ansicht des Moduls nach Fig. 1 und
- Fig. 5: eine vergrößerte Darstellung einer Einzelheit V nach Fig. 3.

Bei den unterschiedlichen Figuren sind gleiche Teile mit denselben Bezugszeichen versehen, weswegen diese in der Regel auch nur einmal beschrieben werden.

Eine Batterie 2 ist in einem von einem Bodenblech einer Ersatzradmulde und einer Felge eines Ersatzrades gebildeten Hohlraum in einem Heck eines Kraftfahrzeuges, vorzugsweise unterhalb eines Laderaums, mittels eines Moduls 1 befestigt. Auf einem Batterieträger 3 des Moduls 1 ist die Batterie 2 angeordnet, mit dem ein Ersatzradträger 4 zur Halterung des Ersatzrades verbunden ist, um die Felge von der Batterie 2 zu beabstanden. Das Modul 1 umfasst somit den Batterieträger 3 und den Ersatzradträger 4. Die Batterie 2 ist eine übliche Starterbatterie mit rechteckiger oder quadratischer Grundfläche.

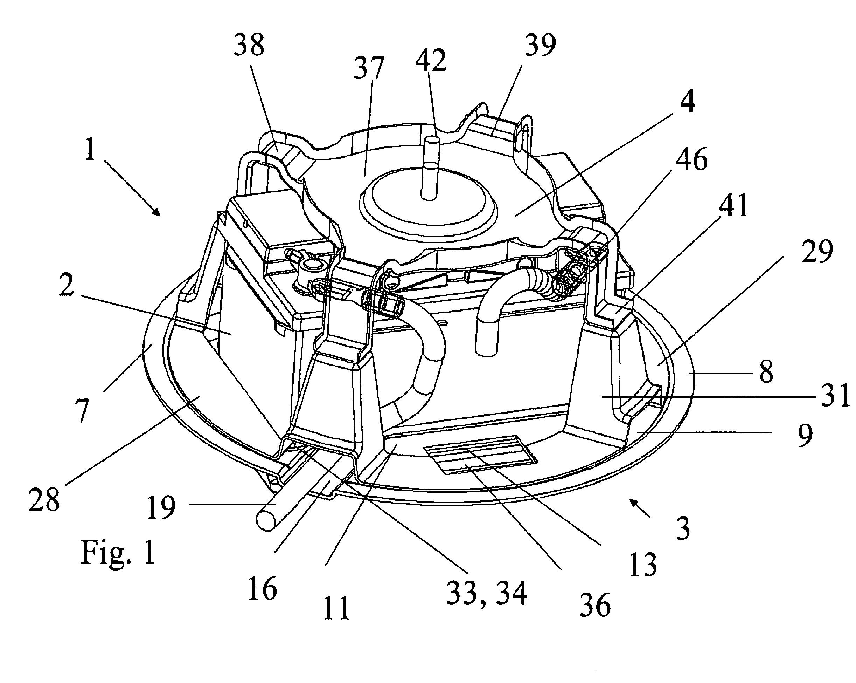

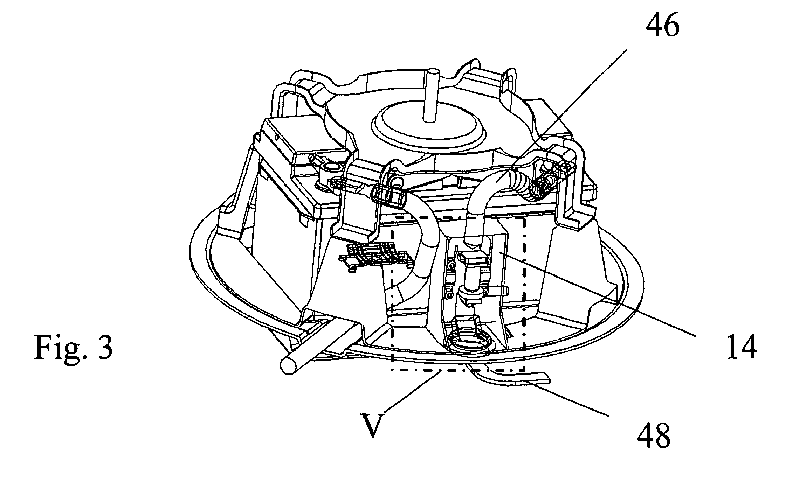

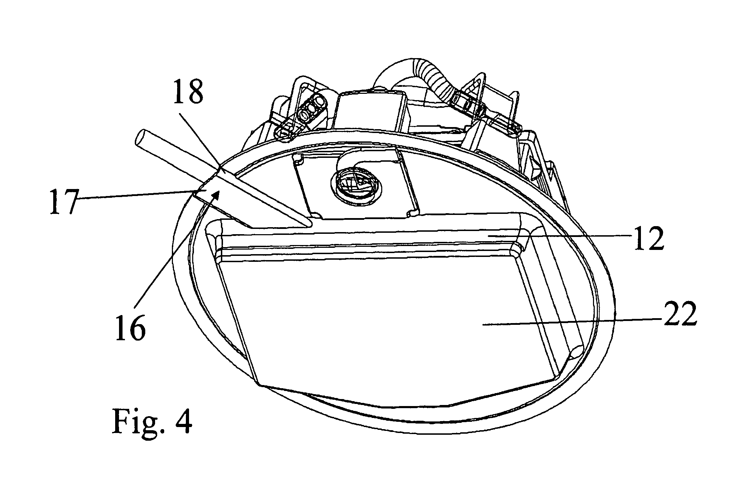

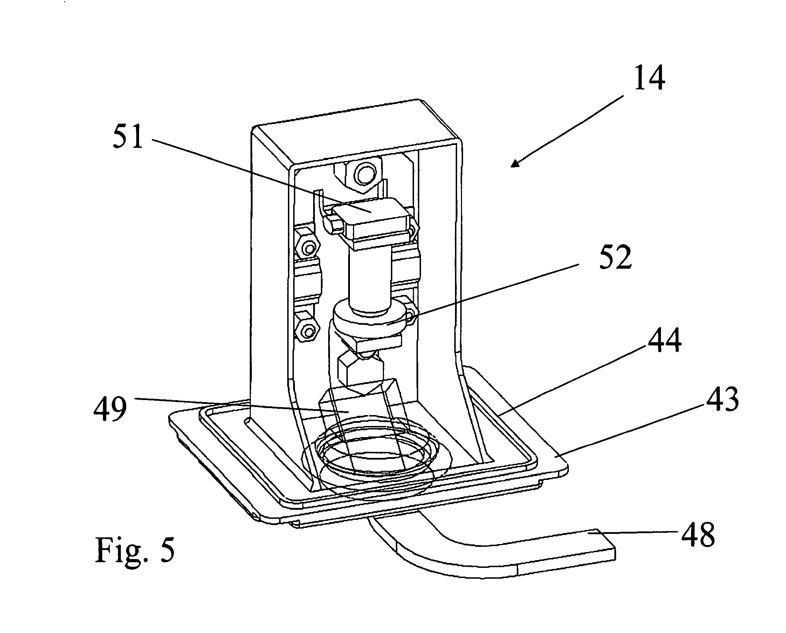

Der Batterieträger 3 weist eine kreisförmige Grundfläche 7 auf, die ist im Querschnitt abgestuft ausgestaltet ist. Ein Auflagerand 8 geht nach einer ersten Stufe 9 in eine Trägerfläche 11 über (Fig. 1), an der eine wannenartige Vertiefung 12 ausgebildet ist (Fig. 4). Die Trägerfläche 11 ist mit einer rechteckigen Öffnung 13 für ein Sicherungsgehäuse 14 versehen (Fig. 3 und 5). Weiterhin ist an der Trägerfläche 11 eine Ausformung 16 angeordnet, die linear, etwas schräg ausgerichtet von der Vertiefung 12 zum Auflagerand 8 verläuft und U-förmig mit einem Steg 17 und zwei davon abgehenden Schenkeln 18 ausgeführt ist (Fig. 1 und 4). Die Schenkel 18 sind derart zueinander beabstandet und bemessen, dass ein Batterie-Massekabel 19 vollumfänglich von der Ausformung 16 aufgenommen ist.

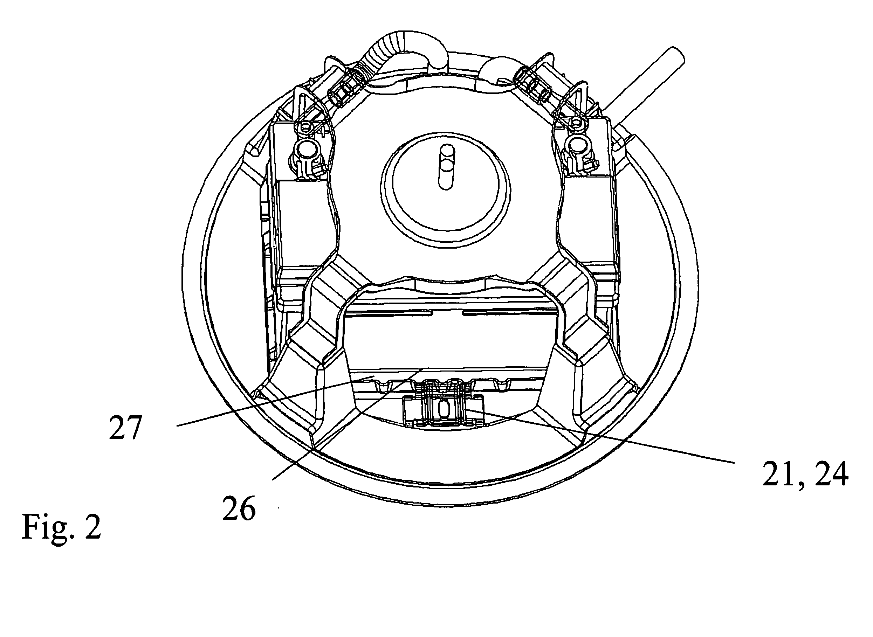

Zur Befestigung der Batterie 2 dient eine Aufnahme 21 in der Vertiefung 12, die sich von dem polygonartig geformten, an die äußeren Abmaße der Batterie 2 angepassten Boden 22 der Vertiefung 12 bis kurz unterhalb der Trägerfläche 11 erstreckt. Durch die Aufnahme 21 ist der Boden 22 in Richtung zu einer Fahrzeugfront pfeilartig erweitert. In der Aufnahme 21 befindet sich ein als Klemmplatte ausgebildetes Befestigungsmittel 24, das mit seinem freien Ende 26 in die Vertiefung 12 hineinragt (Fig. 2). Zur Verklemmung mit dem Befestigungsmittel 24 weist die Batterie 2 fußseitig einen stegartigen Rand 27 auf, dessen Oberkante sich im eingesetzten Zustand der Batterie 2 in etwa auf der Höhe der Trägerfläche 11 befindet, wobei der Rand 27 etwas über die Oberseite der Trägerfläche 11 hinausragt, um eine sichere Verklemmung mit dem Befestigungsmittel 24 zu bewirken. Das Befestigungsmittel 24 ist an einer zur Öffnung 13 gegenüberliegenden Seite des Batterieträgers 3 angeordnet. Die Batterie 2 ist von einer durch die Trägerfläche 11 gebildeten umlaufenden Kante umgeben, wobei die Aufnahme 21 innerhalb der Vertiefung 12 ein Widerlager für die Batterie 2 bildet.

Der Batterieträger 3 weist ein Aufsatzstück 28 auf, das vier von einer an die Trägerfläche 11 angepassten Aufstandsfläche 29 abstehende Dome 31 umfasst (Fig. 1), die innen hohl und umfangsmäßig gleich auf der Aufstandsfläche 29 verteilt sind. Mit der Aufstandsfläche 29 ist das Aufsatzstück 28 mit seiner äußeren Kante an die erste Stufe des Batterieträgers 3 angelegt. Jeder Dom 31 weist an seinem Fußende 33 brückenähnliche Ausnehmungen 34 auf. Ist das Aufsatzstück 28, wie in den Fig. 1 und 3 gezeigt, mit dem Batterieträger 3 verbunden, kann das Batterie-Massekabel 19 ohne Behinderung von dem Batterieträger 3 durch die Öffnung zwischen der Ausnehmung 34 und der Ausformung 16 weggeführt werden. Weiterhin ist in der Aufstandfläche 29 eine an die Öffnung 13 angepasste Ausnehmung 36 eingebracht. Damit bleibt die Öffnung 13 in ihrer Gesamtheit geöffnet. Das Aufsatzstück 28 ist über die Aufstandsfläche 29 fest mit der Trägerfläche 11 verbunden.

Der Ersatzradträger 4 ist im Wesentlichen spinnenartig ausgeführt und weist einen Grundkörper 37 auf, an dessen Rand vier Trägerfüße 38 angeordnet sind. Die Trägerfüße 38 sind entsprechend den Domen 31 umfangsmäßig gleich an dem Grundkörper 37 verteilt und U-förmig ausgestaltet sowie S-förmig gebogen. Mit einer Kopfkröpfung 39 sind die Trägerfüße 38 an dem Grundkörper 37 angebunden. An ihren Fußenden 41 sind die Trägerfüße abgekröpft, damit die Trägerfüße 38 plan auf den Domen 31 aufliegen. Mittels nicht dargestellter Schrauben sind die Trägerfüße 38 mit den Domen 31 verschraubt, die in ihrem Inneren eine drehfest angeordnete Mutter aufweisen. Der Ersatzradträger 4 trägt in der Mitte des Grundkörpers 37 einen Gewindebolzen 42 zur Befestigung des Ersatzrades.

In der Öffnung 13 ist das Sicherungsgehäuse 14 aufgenommen, das mit einem Anlageflansch 43 an der Unterseite der Grundfläche 7 des Batterieträgers 3 anliegt und mit einer Flachdichtung 44 abgedichtet ist. Ein Stromkabel 46 führt von der Batterie 2 zu einer in dem Sicherungsgehäuse 14 angeordneten Absicherungsvorrichtung 51, die das Stromkabel 46 bei einem Crash oder bei einer Beschädigung des Stromkabels 46 vom Bordnetz trennt. Dies wird mit einer Airbag-Zündpille bewirkt. Weiterhin ist in dem Sicherungsgehäuse 14 eine Strom-Verteilung 52 mit einer entsprechenden Absicherung für die elektrische Versorgung notwendiger Aggregate, die im Falle einer Abtrennung des Stromkabels 46 an der Stromversorgung verbleiben müssen, vorgesehen. Derartige Aggregate sind beispielsweise Airbags, ABS, Zentralverriegelung und/oder die Beleuchtung des Kraftfahrzeuges. Lediglich aus Übersichtsgründen ist das Sicherungsgehäuse 14 in den Fig. 3 und geöffnet. Selbstverständlich ist die geöffnete Seite mittels einer zu Wartungszwecken zu entfernenden Wandung verschlossen. Das Stromkabel 46 ist durch eine Tülle 49 als ein an das Bordnetz angeschlossener Flachleiter 48 aus dem Sicherungsgehäuse 14 herausgeführt.

Das Modul 1 wird aus Handhabbarkeitsgründen derart in der Ersatzradmulde angeordnet, dass das Sicherungsgehäuse 14 an einer zu einer Heckklappe weisenden Seite angeordnet ist.

### Bezugszeichenliste

- 1.: Modul
- 2.: Batterie
- 3.: Batterieträger
- 4.: Ersatzradträger
- 5.:
- 6.:
- 7.: Grundfläche
- 8.: Auflagerand
- 9.: Stufe
- 10.:
- 11.: Trägerfläche
- 12.: Vertiefung
- 13.: Öffnung
- 14.: Sicherungsgehäuse
- 15.:
- 16.: Ausformung
- 17.: Steg
- 18.: Schenkel
- 19.: Massekabel
- 20.:
- 21.: Aufnahme
- 22.: Boden v. 12
- 23.:
- 24.: Befestigungsmittel
- 25.:
- 26.: freies Ende v. 24
- 27.: Verbreiterung an 2
- 28.: Aufsatzstück
- 29.: Aufstandsfläche
- 30.:
- 31.: Dome
- 32.:
- 33.: Fußende
- 34.: Ausnehmung
- 35.:
- 36.: Ausnehmung
- 37.: Grundkörper
- 38.: Trägerfüße
- 39.: Kopfkröpfung
- 40.:
- 41.: Fußenden
- 42.: Gewindebolzen
- 43.: Anlageflansch
- 44.: Flachdichtung
- 45.:
- 46.: Stromkabel
- 47.:
- 48.: Flachleiter
- 49.: Tülle
- 50.:
- 51.: Absicherungsvorrichtung
- 52.: Strom-Verteilung

## Patentansprüche

1. Modul zur Befestigung einer Batterie (2) in einem von einer Felge eines Ersatzrades und einer Ersatzradmulde gebildeten Hohlraum in einem Kraftfahrzeug, **gekennzeichnet durch** einen in der Ersatzradmulde gehaltenen Batterieträger (3) und einen damit verbundenen, die Batterie (2) zumindest teilweise übergreifenden Ersatzradträger (4), wobei dem Batterieträger (3) ein Befestigungsmittel (24) für die Batterie (3) zugeordnet ist.

2. Modul nach Anspruch 1, **dadurch gekennzeichnet, dass** der Batterieträger (3) einen zylindrischen Auflagerand (8) aufweist, der abgestuft in eine Trägerfläche (11) mit einer wannenartigen Vertiefung (12) zur Aufnahme der Batterie (2) übergeht.

3. Modul nach Anspruch 2, **dadurch gekennzeichnet, dass** der Batterieträger (3) zumindest eine von der Vertiefung (12) zum Auflagerand (8) verlaufende Ausformung (16) für den Durchtritt eines an die Batterie (2) angeschlossenen Massekabels (19) eines Bordnetzes aufweist.

4. Modul nach Anspruch 2, **dadurch gekennzeichnet, dass** in die Trägerfläche (11) eine Öffnung (13) zur Aufnahme eines Sicherungsgehäuses (14) eingelassen ist.

5. Modul nach Anspruch 4, **dadurch gekennzeichnet, dass** das Sicherungsgehäuse (14) abgedichtet in der Öffnung (13) befestigt ist.

6. Modul nach Anspruch 4 oder 5, **dadurch gekennzeichnet, dass** das Sicherungsgehäuse (14) eine Absicherungsvorrichtung (51) zur Trennung eines Stromkabels (46) vom Bordnetz umfasst.

7. Modul nach einem der Ansprüche 4 bis 6, **dadurch gekennzeichnet, dass** das Sicherungsgehäuse (14) eine Strom-Verteilung (52) mit einer Absicherung für eine Spannungsversorgung notwendiger Aggregate aufweist, die bei einer Trennung des Stromkabels (46) vom Bordnetz weiterhin mit Spannung versorgt werden müssen.

8. Modul nach Anspruch 1, **dadurch gekennzeichnet, dass** das Befestigungsmittel (24) in einer Aufnahme (21) angeordnet ist, die sich von einem Boden (22) der Vertiefung (12) bis kurz unterhalb der Trägerfläche (11) des Batterieträgers (3) erstreckt.

9. Modul nach einem der Ansprüche 1 bis 8, **dadurch gekennzeichnet, dass** der Batterieträger (2) aus einem Kunststoff, insbesondere einem faserverstärkten Kunststoff, besteht.

10. Modul nach einem der Ansprüche 1 bis 9, **dadurch gekennzeichnet, dass** der Batterieträger (3) ein Aufsatzstück (28) zur Halterung des Ersatzradträgers (4) aufweist.

11. Modul nach Anspruch 10, **dadurch gekennzeichnet, dass** das Aufsatzstück (28) mit seiner Aufstandfläche (29) an die Trägerfläche (11) angepasst ist und zumindest einen von der Aufstandsfläche (29) abstehenden Dom (31) mit einer brückenartigen Ausnehmung (34) an seinem Fußende (33) aufweist.

12. Modul nach einem der Ansprüche 1 bis 11, **dadurch gekennzeichnet, dass** Trägerfüße (38) des Ersatzradträgers (4) an einer Verbindungsseite zu den Domen (31) des Aufsatzstückes (28) abgekröpft sind, um eine plane Verbindungsfläche mit den Stirnseiten der Dome (32) zu bilden.

13. Modul nach Anspruch 12, **dadurch gekennzeichnet, dass** jeder Trägerfuß (38) mit dem zugehörigen Dom (31) verschraubt ist.

14. Modul nach einem der Ansprüche 1 bis 13, **dadurch gekennzeichnet, dass** der Ersatzradträger (4) auf seinem Grundkörper (37) mit einem Bolzen (42) zur Befestigung des Ersatzrades (6) versehen ist.

## Claims

1. Module for fastening a battery (2) in a cavity formed in a motor vehicle by a rim of a spare wheel and by a spare wheel well, **characterized by** a battery carrier (3), which is held in the spare wheel well, and a spare wheel carrier (4), which is connected to the battery carrier (3) and at least partially overlaps the battery (2), wherein a fastening means (24) for the battery (3) is associated with the battery carrier (3).

2. Module according to claim 1, **characterized in that** the battery carrier (3) has a cylindrical supporting rim (8), which merges in a stepped manner into a carrier surface (11) having a trough-like recess (12) for receiving the battery (2).

3. Module according to claim 2, **characterized in that** the battery carrier (3) has at least one shaped portion (16) extending from the recess (12) to the supporting rim (8) for the passage of an earth cable (19) of a vehicle electrical system that is connected to the battery (2).

4. Module according to claim 2, **characterized in that** an opening (13) for receiving a safety housing (14) is let into the carrier surface (11).

5. Module according to claim 4, **characterized in that** the safety housing (14) is fastened in a sealed manner in the opening (13).

6. Module according to claim 4 or 5, **characterized in that** the safety housing (14) comprises a fuse protection device (51) for disconnecting a power cable (46) from the vehicle electrical system.

7. Module according to one of claims 4 to 6, **characterized in that** the safety housing (14) comprises a power distribution unit (52) having a fuse protection for a supply of power to necessary units of equipment, which in the event of disconnection of the power cable (46) from the vehicle electrical system still have to be supplied with power.

8. Module according to claim 1, **characterized in that** the fastening means (24) is disposed in a receiver (21) that extends from a base (22) of the recess (12) to a point just below the carrier surface (11) of the battery carrier (3).

9. Module according to one of claims 1 to 8, **characterized in that** the battery carrier (2) is made of a plastics material, in particular of a fibre-reinforced plastics material.

10. Module according to one of claims 1 to 9, **characterized in that** the battery carrier (3) comprises an attachment piece (28) for mounting the spare wheel carrier (4).

11. Module according to claim 10, **characterized in that** the attachment piece (28) has a contact area (29) adapted to the carrier surface (11) and at least one dome (31), which protrudes from the contact area (29) and has a bridge-like cutout at its foot end (33).

12. Module according to one of claims 1 to 11, **characterized in that** carrier feet (38) of the spare wheel carrier (4) at a connection side are offset towards the domes (31) of the attachment piece (28) in order to form a connecting surface level with the end faces of the domes (32).

13. Module according to claim 12, **characterized in that** each carrier foot (38) is screw-fastened to the associated dome (31).

14. Module according to one of claims 1 to 13, **characterized in that** the spare wheel carrier (4) is provided on its base body (37) with a bolt (42) for fastening the spare wheel.

## Revendications

1. Module pour fixer une batterie (2) dans un espace creux constitué par une jante d'une roue de secours et une auge de roue de secours dans un véhicule : automobile, **caractérisé par** un porte-batterie (3) maintenu dans l'auge de roue de secours et un porte-roue de secours (4) relié à celui-ci, qui englobe au moins en partie la batterie (2), un moyen de fixation (24) pour la batterie (2) étant associé au porte-batterie (3).

2. Module selon la revendication 1, **caractérisé en ce que** le porte-batterie (3) présente un bord d'appui (8), qui évolue graduellement en une face porteuse (11) avec un renfoncement (12) pour recevoir la batterie (2).

3. Module selon la revendication 2, **caractérisé en ce que** le porte-batterie (3) présente au moins une protubérance (16) allant du renfoncement (12) au bord d'appui (8) pour le passage d'un câble de masse (19) d'un circuit de bord, relié à la batterie (2).

4. Module selon la revendication 2, **caractérisé en ce qu'**une ouverture (13) est laissée dans la face porteuse (11) pour abriter un boîtier de sécurité (14).

5. Module selon la revendication 4, **caractérisé en ce que** le boîtier de sécurité (14) est fixé hermétiquement dans l'ouverture (13).

6. Module selon la revendication 4 ou 5, **caractérisé en ce que** le boîtier de sécurité (14) comporte un dispositif de protection (51) pour isoler un câble de courant (46) du circuit de bord.

7. Module selon une des revendications 4 à 6, **caractérisé en ce que** le boîtier de sécurité (14) présente une distribution de courant (52) avec une protection pour une alimentation en courant d'agrégats nécessaires qui, dans le cas d'une isolation du câble de courant (46) du circuit de bord, doivent être encore alimentés en courant.

8. Module selon la revendication 1, **caractérisé en ce que** le moyen de fixation (24) est disposé dans un logement (21) qui s'étend d'un fond (22) du renfoncement (12) à un peu en dessous de la face porteuse (11) du porte-batterie (3).

9. Module selon une des revendications 1 à 8, **caractérisé en ce que** le porte-batterie (2) est réalisé en matière synthétique, en particulier en matière synthétique renforcée par des fibres.

10. Module selon une des revendications 1 à 9, **caractérisé en ce que** le porte-batterie (3) présente une plaque d'assise (28) pour maintenir le porte-roue de secours (4).

11. Module selon la revendication 10, **caractérisé en ce que** la plaque d'assise (28) avec sa face de montage (29) est adaptée à la face porteuse (11) et présente au moins un dôme (31) écarté de la face de montage (29) avec un évidement (34) en forme de pont à son extrémité inférieure (33).

12. Module selon une des revendications 1 à 11, **caractérisé en ce que** des pattes porteuses (38) du porte-roue de secours (4) sont recourbées sur un côté de liaison par rapport aux dômes (31) de la plaque d'assise (28), afin de former une face de liaison plane avec les faces frontales des dômes (31).

13. Module selon la revendication 12, **caractérisé en ce que** chaque patte porteuse (38) est boulonnée au dôme (31) correspondant.

14. Module selon une des revendications 1 à 13, **caractérisé en ce que** le porte-roue de secours (4) est pourvu d'un axe (42) sur son corps de base (37) pour fixer la roue de secours (6).
